# EUROPÄISCHE PATENTSCHRIFT

(11) **EP 3 235 111 B1**
(45) Veröffentlichungstag und Bekanntmachung des Hinweises auf die Patenterteilung: **21.11.2018**
(21) Anmeldenummer: 16700399.5
(22) Anmeldetag: 07.01.2016
(51) Int. Cl.: H02K 19/14, H02K 1/24, H02K 15/00, H02K 15/02, H02K 17/16, B22D 19/00

(54) **ROTOR EINER SYNCHRONEN RELUKTANZMASCHINE**
ROTOR OF A SYNCHRONOUS RELUCTANCE MACHINE
ROTOR D'UNE MACHINE À RÉLUCTANCE SYNCHRONE

(30) Priorität: 19.03.2015 EP 15159862
(43) Veröffentlichungstag der Anmeldung: 25.10.2017
(73) Patentinhaber: Siemens Aktiengesellschaft, 80333 München (DE)
(72) Erfinder: BÜTTNER, Klaus, 97618 Hollstadt (DE); CERNY, Marco, 97720 Nüdlingen (DE); WARMUTH, Matthias, 97618 Windshausen (DE)
(86) Internationale Anmeldenummer: PCT/EP2016/050203
(87) Internationale Veröffentlichungsnummer: WO 2016/146271

(56) Entgegenhaltungen:
- DE-A1- 2 745 629
- DE-A1-102014 201 740
- GB-A- 2 023 459
- JP-A- S5 851 759
- JP-A- H11 146 615
- US-A1- 2003 173 861
- US-A1- 2003 184 185

## Beschreibung

Die Erfindung betrifft einen Rotor, insbesondere einer direkt am elektrischen Versorgungsnetz betreibbaren synchronen Reluktanzmaschine, wobei der Rotor eine Achse aufweist und welcher Rotor mit zumindest abschnittsweise axial geschichteten Blechen versehen ist, wobei der Rotor als Reluktanzläufer ausgebildet ist, der ein vorgegebene Anzahl von Polen des Rotors aufweist, die durch Flussleitabschnitte und insbesondere unmagnetische Flusssperrabschnitte der einzelnen Bleche gebildet sind, wobei der Rotor zumindest einen Käfig aufweist, der durch im Wesentlichen axial verlaufende elektrische Leiter, die an den Stirnseiten des Rotors jeweils durch Kurzschlussringe verbunden sind, gebildet ist.

Des Weiteren betrifft die Erfindung eine synchrone Reluktanzmaschine und ein Verfahren zur Herstellung eines Rotors einer synchronen Reluktanzmaschine.

Rotoren rotatorisch dynamoelektrischer Reluktanzmaschinen sind geblecht und anisotrop aufgebaut. Für den magnetischen Fluss sind Flussleitabschnitte und Flusssperrabschnitte in der Kontur der einzelnen Bleche gestaltet. Dadurch sind die Flüsse in den magnetischen Achsen d und q unterschiedlich. Der Rotor weist somit ausgeprägte Pole auf. Diese Pole sind nunmehr dadurch geschaffen worden, dass unterschiedliche Induktivitäten in der d- und q-Achse des Rotors konstruktiv gestaltet werden. Dabei werden die Oberflächen des Rotors beispielsweise mit einer gezahnten Struktur versehen oder es werden Flusssperren in die Bleche des Rotors, eingestanzt.

So zeigt z.B. die US 4 795 936 A1 einen Läufer, bei dem durch Aussparung die Induktivitäten des Läufers verändert werden. Die Mitte der d-Achse ist damit mit weichmagnetischem Material versehen und steht als Flusspfad zur Verfügung. Dieser Aufbau erzeugt unterschiedliche magnetische Widerstände in den magnetischen d- und q-Achsen des Rotors, somit werden dort ausgeprägte Pole des Rotors gebildet. Die Induktivität der d-Achse ist größer als die Induktivität der q-Achse. Damit sind auch die magnetischen Widerstände in diesen Achsen unterschiedlich ausgeführt. Die Differenz der Induktivität ist davon maßgeblich für die Drehmomentausbeute der Reluktanzmaschine. Um einen synchronen Reluktanzmotor auch direkt an einem elektrischen Versorgungsnetz z.B. 400 Volt, 50 Hz starten und mit der Netzfrequenz synchronisieren zu können, ist im Rotor zusätzlich ein Kurzschlusskäfig für einen Direktanlauf vorzusehen.
So zeigt beispielsweise die US 2006/0108888 A1 einen Rotor mit Kurzschlussstäben. Dabei sind die Stäbe im Blech des Rotors durch Stege von den Flusssperren getrennt. Es liegen also örtlich begrenzte Leiterstäbe vor. Diese Stege wirken sich jedoch negativ auf die Eigenschaften des Reluktanzläufers aus, da ein Teil des magnetischen Flusses in diesem Bereich geschlossen wird und nicht mehr zur Drehmomentbildung beitragen kann. Dadurch verringert sich die Effizienz, wie auch die Leistungsdichte der synchronen Reluktanzmaschine.
Ebenso ist aus der WO 2014/166555 A2 ein Reluktanzläufer bekannt, dessen Flusssperren komplett ausgegossen sind. Der erhöhte Materialeinsatz erhöht die Trägheit und die Kosten des Rotors. Des Weiteren ist beim Einsatz eines Druckgießverfahrens eine Abstützung der Blechgeometrie von außen während des Gießverfahrens erforderlich, da durch Beaufschlagung mit Druck in den Flusssperren die radial äußeren Stege des Blechpaketes in ihrer Zugfestigkeit während des Gießens gegebenenfalls überlastet werden können.

Aus der US 2003/0184185 A1 ist ein weiterer Reluktanzläufer bekannt.

Ausgehend davon liegt der Erfindung die Aufgabe zugrunde, einen Rotor einer synchronen Reluktanzmaschine bereitzustellen, der in einfacher Art und Weise herzustellen ist und dennoch einen direkten Anlauf einer synchronen Reluktanzmaschine an einem elektrischen Versorgungsnetz gewährleistet.

Die Lösung der gestellten Aufgabe gelingt mittels eines Rotors nach Anspruch 1.

Ebenso gelingt die Lösung der gestellten Aufgabe durch ein Verfahren zur Herstellung eines Rotors nach Anspruch 5.

Die elektrischen Leiter des nunmehr vorhandenen Kurzschlusskäfigs des Rotors befinden sich an den radial äußeren Enden zumindest einiger Flusssperren des Blechpaketes des Rotors. Damit ist u.a. ein effizienter Hochlauf der Reluktanzmaschine direkt an einem elektrischen Versorgungsnetz - also auch ohne elektrisch dazwischengeschalteten Umrichter gewährleistet.

Die als Leiter vorgesehenen elektrisch leitfähig nichtmagnetischen Materialien sind dabei reines Aluminium (Aluminium 99,7), Aluminiumlegierungen, Kupfer, Kupferlegierungen, leitfähiges Material in Kunststoff oder Harz gebunden, NichtEisenmetalle in Pulverform in Kunststoff oder Harz, als auch Carbon-Nano-Tubes in Kunststoff oder Harz, vorzugsweise mit dünnen kurzen Fasern ausgestaltet.

Bevorzugt ist das Material dieser Leiter ein Metall und/oder eine Metalllegierung. Gemäß einer Ausführungsform der Erfindung umfasst der Leiter in zumindest einem Bereich jeweils zumindest eines der folgenden Materialien: Kupfer, Aluminium, Magnesium, eine Legierung, hierbei bevorzugt eine Aluminiumlegierung, insbesondere Silumin.

Die Flussleitabschnitte sind in bekannter Weise voneinander durch unmagnetische Flusssperrbereiche getrennt. Die Flusssperrabschnitte sind dabei unmagnetisch, d.h. insbesondere dadurch, dass sie kein ferromagnetisches Material, also z.B. Ausstanzungen sind die Luft aufweisen. Bei dem erfindungsgemäßen Rotor ist in mehreren oder allen Flusssperrbereichen in den radial äußeren Bereichen dieser Flusssperrabschnitte ein elektrisch leitfähiges, nicht-ferromagnetisches Füllmaterial angeordnet. Unter elektrisch leitfähig ist hier zu verstehen, dass das Füllmaterial einen hohen elektrischen Leitwert aufweist, insbesondere einen Leitwert von größer als 10⁵ S/m (Siemens pro Meter), bevorzugt größer als 10⁶ S/m.

Ein nicht-ferromagnetisches Material ist im Zusammenhang mit der Erfindung z.B. ein gänzlich unmagnetisches Material, z.B. eine Keramik mit Kohlenstoffnanoröhren oder ein Polymer mit Kohlenstoffnanoröhren, oder ein paramagnetisches oder diamagnetisches Material.

Um die Drehmomentwelligkeit des Rotors der synchronen Reluktanzmaschine, also die Rippelglättung zu beeinflussen, sind vorzugsweise die Pole des Rotors über die axiale Länge betrachtet geschrägt, windschief oder gestaffelt ausgeführt. Dabei ist selbstverständlich darauf zu achten, dass durch eine Schrägung oder Staffelung der Herstellungsprozess der axial verlaufenden Leiter, wie später beschrieben, gewährleistet ist und ein Käfig innerhalb des Rotors geschaffen werden kann. Es ist dabei wichtig, dass auch bei ein Schrägung oder Staffelung axial durchgehende Leiter vorhanden sind.

Der erfindungsgemäße Rotor wird insbesondere dadurch hergestellt, dass das axial paketierte Blechpaket des Rotors in einer Hilfsvorrichtung gesetzt wird, an einer Stirnseite eine Kurzschlussringschale angebracht ist und diese mit dem elektrisch leitfähigem unmagnetischen Material in flüssiger Form aufgefüllt wird, bis zu einem vorgegebenen Füllstand.

Ebenso können auch an beiden Stirnseiten des Blechpakets Kurzschlussringschalen angebracht sein, die bis zu einem vorgegebenen Füllstand mit dem elektrisch leitfähigen unmagnetischen Material in flüssiger Form aufgefüllt werden.

Anschließend wird durch Einfließen dieses leitfähigen Materials in die Flusssperren und einem anschließenden und/oder nachgeschalteten Schleudergussverfahren dieses Material innerhalb der vorgesehenen Flusssperren in die radial äußeren Bereiche dieser Flusssperren gezwungen, wo es erhärtet und so zumindest einen Kurzschlussstab - also einen elektrischen Leiter - an den radial äußeren Rändern der Flusssperren bildet.

Um ein vorzeitiges Aushärten des elektrisch leitfähigen Materials in den Flusssperren zu verhindern, wird das Blechpaket des Rotors vorgewärmt und/oder während des Prozesses gewärmt.

Damit verbleibt das leitfähige Material länger in seinem flüssigen Zustand, und kann damit im Rahmen des Herstellungsprozesses, insbesondere durch die Zentrifugalkräfte innerhalb der jeweiligen Flusssperre besser positioniert werden.

Der erfindungsgemäße Rotor weist nunmehr gegenüber vergleichsweise hergestellten Rotoren eine reduzierte Masse und damit ein reduziertes Trägheitsmoments auf. Dies führt auch zu Einsparungen von Ressourcen. Des Weiteren ist die Herstellung des Blechschnitts - also das Bereitstellen eines geeigneten Stanzwerkzeugs - außerdem vergleichsweise einfach, da keine Abtrennungen bzw. Stege zwischen den Nuten der Leiter und Flussleitabschnitten und Flusssperrabschnitten in den Blechen erforderlich sind. Die Querschnitte der Leiter, also die Stabquerschnitte des Käfigs stellen sich alleine durch das Volumen der eingesetzten leitfähigen, gießfähigen Materials und/oder durch den Innendurchmesser der Kurschlussringschalen einstellt.

Der magnetische Fluss, so wie der Wirkungsgrad der Reluktanzmaschine wird erfindungsgemäß durch das Vorhandensein von Stützstegen innerhalb des Blechpaketes nicht negativ beeinflusst.

Das Verfahren zur Herstellung eines erfindungsgemäßen Rotors eignet sich für unterschiedlichste Stabquerschnitte und Polzahlen. Somit ist es erfindungsgemäß möglich, mit einem einzigen Rotorblechschnitt einen synchronen Reluktanzmotor mit oder ohne Käfig herzustellen.

Durch den erfindungsgemäßen Rotor ergibt sich der Vorteil, dass die Flusssperrbereiche bzw. Flusssperrabschnitte mit dem darin angeordneten Füllmaterial Käfigstäbe eines Läuferkäfigs bilden und so in dem erfindungsgemäßen Reluktanzrotor integriert sind. Zusammen mit Kurzschlussringen und den Käfigstäben, also dem Rotorkäfig kann nunmehr ein synchroner Reluktanzmotor asynchron anlaufen, bzw. in einfacher Art und Weise Lastschwankungen ausgleichen, die den Rotor am synchronen Lauf hindern. Der Rotor läuft somit nach einem asynchronen Anlauf, Hochlauf oder Lastschwankungen selbstständig in den synchronen Betrieb. Der Rotor ist damit Rotor eines Reluktanz-Synchronmotors mit wesentlich höherem Wirkungsgrad bzw. höherer Leistungsdichte als ein vergleichbarer Asynchronmotor, da im Läufer nahezu keine Verluste entstehen. Bei synchronem Drehbetrieb, also wenn der Rotor mit der Drehfrequenz des magnetischen Statordrehfelds rotiert, gibt es keine Relativbewegung/Schlupf des Statorfelds zum Rotorfeld, respektive keine Induktion in den Rotorstäben des Rotorkäfigs.

Durch die Wahl des Füllmaterials der Leiter - also des damit einstellbaren elektrischen Widerstandes - ist somit auch die Möglichkeit zur Optimierung des Anlaufverhaltens des Rotors unabhängig von seinem synchronen Drehverhalten möglich. Das Füllmaterial ist im erkalteten Zustand bevorzugt derart steif, dass es den Rotor auch gegen Fliehkräfte stabilisiert, sodass der Rotor für einen Betrieb bei einer Drehzahl von mehr als 3000 U/min (Umdrehungen pro Minute), insbesondere mehr als 7000 U/min, ausgelegt ist.

Gemäß einer Weiterbildung der Erfindung ist an gegenüberliegenden axialen Paketenden des Blechpakets jeweils eine elektrisch leitfähige und nicht-ferromagnetische Scheibe angeordnet, durch welche die Käfigstäbe elektrisch verbunden sind und hierdurch die Scheiben den Kurzschlussring des Käfigläufers bilden. Die Scheiben können in vorteilhafter Weise durch ein Druckgussverfahren oder ein Spritzgussverfahren mit geringem Aufwand bereitgestellt werden. Die Scheiben können aus dem jeweilig verwendeten Füllmaterial der Leiter gebildet sein.

Eine weitere, mit geringem Aufwand zu realisierende Möglichkeit des Einstellens des elektrischen Widerstands des Rotorkäfigs ergibt sich gemäß einer Ausführungsform, bei welcher ein jeweiliger effektiver Leitungsquerschnitt der Scheiben zwischen zwei Leitern also Käfigstäben derart gering ist, dass die Scheiben in dem Leitungsquerschnitt jeweils einen größeren elektrischen Widerstand aufweisen als die Leiter bzw. Käfigstäbe. Beispielsweise kann eine Scheibendicke in axialer Richtung bemessen derart gering sein, dass der Strompfad in einem Übergang von einem Käfigstab zum nächsten in der Scheibe einen größeren elektrischen Widerstand aufweist, als in den Käfigstäben. Die Scheiben können auch als Kurzschlussring ausgestaltet sein, also mit einer Aussparung, wodurch ebenfalls der Leitungsquerschnitt festgelegt werden kann.

Gemäß einer Ausführungsform ist auch axial innerhalb des Blechpakets zumindest eine Zwischenscheibe vorgesehen, die ebenfalls aus dem Material der Leiterstäbe oder dem Material der beiden an den Stirnseiten der Blechpaketenden befindlichen Scheiben gebildet sein kann. Hierdurch ergibt sich der Vorteil, dass die mechanische Steifigkeit des Rotors vergrößert und somit eine höhere Drehzahl des Rotors ermöglicht ist. Des Weiteren kann damit eine vorgebbare Staffelung zwischen zwei axial hintereinander angeordneten Teilblechpaketen des Rotors in einfacher Art und Weise geschaffen werden. Zwischen axial benachbarten Polen des Rotors kann damit ein Versatz von bis zu einer Polteilung eingestellt werden.

Das Material der Leiter und die Kurzschlussringe dieser Leiter an den Stirnseiten der Blechpaketenden sind durch das leitfähige Material zu einem festen Verbund vergossen, was einen besonders einfache Gestaltung des Rotors in einer dynamoelektrischen Maschine ermöglicht.

Durch die Erfindung ist schließlich auch eine elektrische Antriebsanordnung bereitgestellt, die eine dynamoelektrische Maschine mit einem Rotor gemäß einer Ausführungsform der Erfindung aufweist. Die dynamoelektrische Maschine ist dabei für einen Betrieb als Synchron-Reluktanzmotor oder als Asynchronmotor ausgelegt. Vorteil der dynamoelektrischen Maschine ist, dass sie in einem asynchronen Betrieb angefahren werden kann und bei Synchronbetrieb mit hohem Wirkungsgrad betrieben werden kann. Im Falle eines Asynchronmotors besteht der Vorteil darin, dass bei geringer Last der Rotor auch in Tritt mit dem Stator-Drehfeld fallen kann und sich hierdurch ein synchroner Reluktanzbetrieb ergibt, durch welchen die elektrischen Verluste im Rotor minimiert sind.

Im einfachsten Fall ist die elektrische Antriebsanordnung eine einzelne dynamoelektrische Maschine. Die erfindungsgemäße Antriebsanordnung kann aber auch mehrere dynamoelektrische Maschinen umfassen, also zu der beschriebenen dynamoelektrischen Maschine kann zumindest eine weitere dynamoelektrische Maschine mit jeweils einem Rotor bereitgestellt sein, welcher eine Ausführungsform des erfindungsgemäßen Rotors darstellt. Alle Maschinen sind bei dieser Ausführungsform an einem gemeinsamen Wechselrichter angeschlossen. Bei einem solchen Gruppenantrieb besteht in der Regel das Problem, mit dem gemeinsamen Wechselrichter einen Synchronbetrieb bei allen dynamoelektrischen Maschinen sicherzustellen. Bei der erfindungsgemäßen Antriebsanordnung ist dieses Problem nicht gegeben, da ein "aus dem Tritt fallender Rotor" sich selbständig mittels seines Läuferkäfigs wieder auf die synchrone Drehzahl beschleunigt.

Bei der Antriebsanordnung kann auch vorgesehen sein, dass eine der dynamoelektrischen Maschinen einen Rotor aufweist, der nicht gemäß der Erfindung ausgestaltet ist. Der Wechselrichter kann dann für einen synchronen Betrieb für diese eine elektrische Maschine ausgestaltet sein. Alle übrigen elektrischen Maschinen sind dann durch ihre Fähigkeit, auch asynchron anzulaufen, ebenfalls von diesem Wechselrichter betreibbar.

Die Erfindung sowie weitere vorteilhafte Ausgestaltungen der Erfindung werden anhand einiger Ausführungsbeispiele näher beschrieben; darin zeigen:
- FIG 1: einen Teillängsschnitt einer synchronen Reluktanzmaschine,
- FIG 2: einen Querschnitt eines Rotors,
- FIG 3: eine perspektivische Darstellung eines Längsschnitts eines Rotors,
- FIG 4: eine perspektivische Darstellung eines Rotors,
- FIG 5: einen Querschnitt eines Rotors und
- FIG 6: einen prinzipiellen Verfahrensschritt bei der Herstellung eines Rotors.

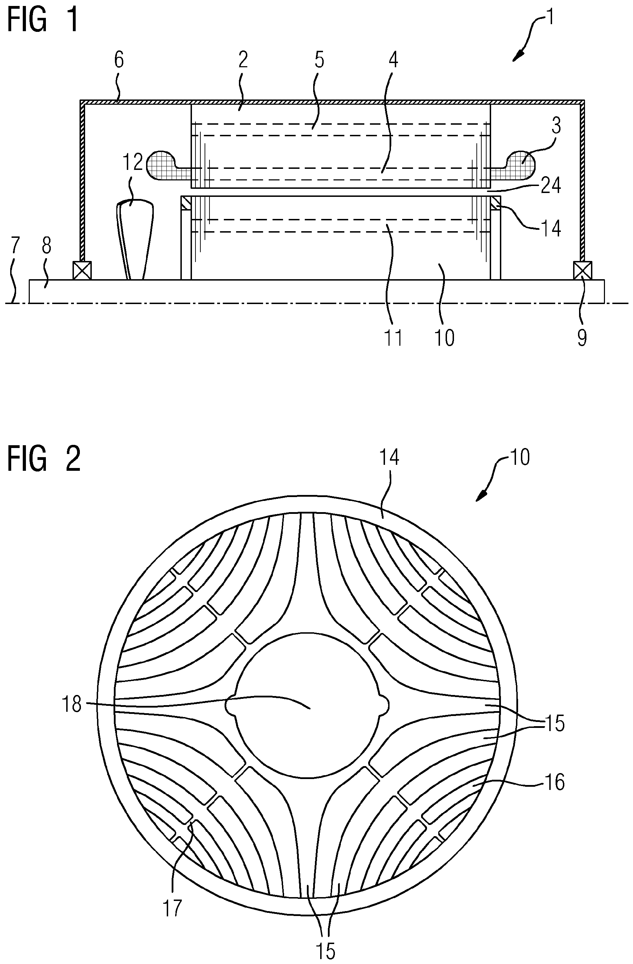

FIG 1 zeigt einen Teillängsschnitt einer synchronen Reluktanzmaschine, die einen Stator 2 aufweist, der in axialer Richtung geblecht ausgeführt ist, wobei in den Stirnseiten des Stators 2 Wickelköpfe 3 angeordnet sind, die Teil eines nicht näher dargestellten Wicklungssystems sind, das in Nuten 4 des Stators 2 angeordnet ist. Durch einen Luftspalt getrennt befindet sich ein Rotor 10. Der Rotor 10 ist, wie im Folgenden näher beschrieben wird, ein Reluktanzläufer mit einem Kurzschlussring 14 an jeder Stirnseite des Rotors 10. Dieser Kurzschlussring 14 ist Teil von, in dieser Darstellung nicht gezeigten Leiterstäben, die sich in dementsprechenden Ausnehmungen des Rotors 10 befinden. Zwischen Stator 2 und Rotor 10 finden elektromagnetische Wechselwirkungen statt, die zu einer Rotation des Rotors 10 und damit der Welle 8 um die Achse 7 führen.

Der Stator 2 befindet sich in einem Gehäuse 6, das wiederum mittels Lager 9 auf der Welle 8 abgestützt ist. Um eine ausreichende Kühlung zu gewährleisten, ist prinzipiell ein Lüfter 12 dargestellt, der über angedeutet dargestellte axiale Kühlkanäle 11 im Rotor 10 bzw. Kühlkanäle 5 im Stator 2 einen Luftaustausch und damit einen Wärmeaustausch der Reluktanzmaschine 1 ermöglicht.

FIG 2 zeigt eine seitliche Darstellung des Rotors 10, der in dieser Ausführung vierpolig ausgeführt ist, wobei die Vierpoligkeit durch eine Anordnung von Flussleitabschnitten 15 und Flusssperren 16 gebildet wird. Die Flusssperren 16 weisen in dieser Ausführungsform mittige Stützstege 17 auf, um radiale Kräfte, insbesondere Fliehkräfte im Betrieb der Reluktanzmaschine 1 aufnehmen zu können. Über die Wellenbohrung 18 wird die Welle 8 mit dem Rotor 10 drehfest verbunden. Der Kurzschlussring 14 befindet sich im radial äußeren Ende des Rotors 10, in direkten Kontakt zur Stirnseite des Rotors 10.

Der Kurzschlussring 14 kann aber auch von der Stirnseite des Rotors 10 beabstandet angeordnet sein, indem Zwischenelemente vorgesehen werden, die axial zwischen Kurzschlussring 14 und Stirnseite des Blechpakets 13 angeordnet sind. Diese elektrisch nicht leitfähigen Zwischenelemente werden nach der Herstellung entnommen oder verbleiben am Rotor 10.

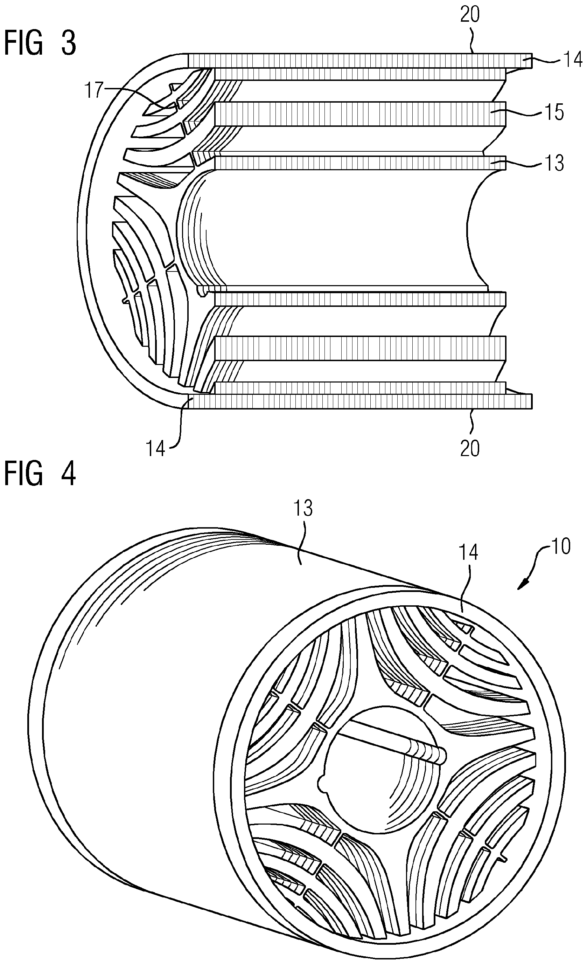

FIG 3 zeigt in einem Längsschnitt eine perspektivische Darstellung des Rotors 10 den aufgeschnittenen Rotor 10, wobei dabei im Gegensatz zu obiger Darstellung zu FIG 2 gezeigt ist, wie der Kurzschlussring 14 axial über die Stirnseite des Rotors 10 übersteht, ohne direkt an der Stirnseite des Rotors 10 anzuliegen. Dabei ist nunmehr auch dargestellt, wie sich vom Kurzschlussring 14 ausgehend, die Leiterstäbe 19 über die gesamte axiale Länge des Blechpaketes 13 des Rotors 10 erstrecken.

FIG 4 zeigt ergänzend zu den vorherigen Figuren nunmehr, dass sich im Bereich des Blechpaketes 13 die Leiterstäbe 19 innerhalb der radialen Stützstege 20 befinden und sich nunmehr nur die Kurzschlussringe 14 axial außerhalb des Blechpaketes 13 des Rotors 10 befinden.

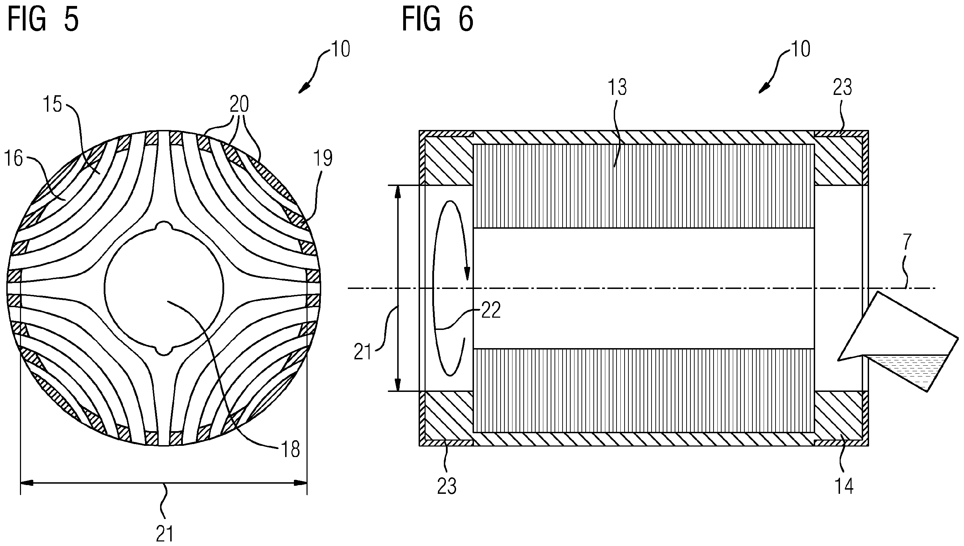

FIG 5 zeigt in einen Querschnitt des Rotors 10 einen weiteren Blechschnitt eines vierpoligen Rotors 10, der Flusssperren 16 ohne mittige Stützstege 17 zeigt. Ansonsten entspricht der Blechschnitt dem der vorherigen Figuren. Auffallend nunmehr dabei ist, dass sich erfindungsgemäß nur in den radial äußeren Enden der Flusssperrabschnitte 16 das leitfähige Material befindet. Das leitfähige Material gelangte nunmehr über ein in FIG 6 prinzipiell dargestelltes Verfahren an diese äußeren Stellen des oder der Flusssperrabschnitts 16. Indem nämlich im Bereich des Kurzschlussringes 14 eine Kurzschlussringschale 23 angeordnet wurde, die bündig mit der Stirnseite des Rotors 10 abschließt und so mit einem elektrisch leitfähigen flüssigen Material gefüllt werden kann, das sich über die axiale Länge des Blechpakets 13 des Rotors 10 des jeweiligen Flusssperrabschnitts 16 verteilt.

Durch Rotation 22 und/oder Taumelbewegung der Vorrichtung und damit des Blechpaketes 13 des Rotors 10 verteilt sich nunmehr das flüssige elektrisch leitfähige Material an den äußeren radialen Rändern der Flusssperrabschnitte 16. Die Querschnitte der somit erhaltenen Leiterstäbe sind jeweils durch die Menge des eingesetzten leitfähigen Materials vorgegeben das wiederum einen inneren Durchmesser 21 der Leiterstäbe bildet.

Zusätzlich kann nach dem erkalten des Leitermaterials in den Flusssperrabschnitten 16 in die Kurzschlussringschale 23 weiteres - gleiches oder ähnliches - Füllmaterial gegeben werden, um auf den auf den gewünschten Querschnitt und/oder die elektrische Leitfähigkeit des Kurzschlussrings 14 zu gelangen.

Derartige synchrone Reluktanzmaschinen 1 werden insbesondere für Lüfter- oder Kompressorantriebe, aber auch bei Gruppenantriebe unterschiedlichster Anwendung eingesetzt.

## Patentansprüche

1. Rotor (10), insbesondere einer direkt am elektrischen Versorgungsnetz betreibbaren synchronen Reluktanzmaschine (1), wobei der Rotor (10) eine Achse (7) aufweist und welcher Rotor (10) mit zumindest abschnittsweise axial geschichteten Blechen (13) versehen ist, wobei der Rotor (10) als Reluktanzläufer ausgebildet ist, der eine vorgegebene Anzahl von Polen des Rotors (10)aufweist, die durch Flussleitabschnitte (15) und insbesondere unmagnetische Flusssperrabschnitte (16) der einzelnen Bleche gebildet sind, wobei der Rotor (10) zumindest einen Käfig aufweist, der durch im Wesentlichen axial verlaufende elektrische Leiter, die an den Stirnseiten des Rotors jeweils durch Kurzschlussringe (14) verbunden sind, gebildet ist, wobei sich die axial verlaufenden Leiter (19) im radial äußeren Bereich zumindest einzelner im Wesentlichen axial hintereinander angeordneter Flusssperrabschnitte (16) befinden, **dadurch gekennzeichnet, dass** durch die Menge des in flüssiger Form bei gleichzeitiger Rotation und/oder Taumelbewegung des Rotors eingesetzten leitfähigen Materials der innere Durchmesser (21) der Leiterstäbe vorgebbar ist.

2. Rotor (10) nach Anspruch 1, **dadurch gekennzeichnet, dass** die Pole des Rotors (10) im axialen Verlauf achsparallel, geschrägt oder windschief ausgeführt sind.

3. Rotor (10) nach Anspruch 2, **dadurch gekennzeichnet, dass** bei einer axialen Staffelung von Teilblechpaketen des Rotors (10) die Flusssperrabschnitte (16) dieser Teilblechpakete um einen vorgegebenen Winkel verdreht derart angeordnet sind, der eine axiale Gestaltung eines axial durchgehenden elektrischen Leiters (19) ermöglicht.

4. Rotor (10) nach einem der vorhergehenden Ansprüche, **dadurch gekennzeichnet , dass** zumindest ein Kurzschlussring (14) von einer Kurzschlussringschale (23) umgeben ist.

5. Verfahren zur Herstellung eines Rotors (10) einer direkt am elektrischen Versorgungsnetz betreibbaren synchronen Reluktanzmaschine (1), wobei der Rotor (10) eine Achse (7) aufweist, welcher Rotor (10) mit zumindest abschnittsweise geschichteten Blechen (13) versehen ist, wobei der Rotor (10) eine vorgegebene Anzahl von Polen aufweist, die durch Flussleitabschnitte (15) und insbesondere unmagnetische Flusssperrabschnitte (16) gebildet sind, durch folgende Schritte
- Stanzen von Blechen mit vorgegebener Blechgeometrie,
- axiales Paketieren dieser Bleche zu zumindest einem Blechpaket (13),
- Eingießen einer vorgegebenen Menge elektrisch leitfähigen nichtmagnetischen Materials in eine vorgegebene Anzahl von Flusssperrabschnitten (16) bei gleichzeitiger Rotation und/oder Taumelbewegung des Rotors (10) in einer Hilfsvorrichtung,
- wobei während des Eingießens und/oder daran anschließend der Rotor (10) um seine Achse (7) mit vergleichsweise hoher Drehzahl geschleudert wird, so dass sich das elektrisch leitfähige nichtmagnetische Material an den radial äußeren Rändern der Flusssperren (16) anordnet und dort erkaltet und so elektrisch leitfähige Stäbe bildet, die die Kurzschlussringe (14) an den Stirnseiten des Rotors (10) des Blechpakets (13) elektrisch miteinander verbinden.

6. Verfahren nach Anspruch 5, **dadurch gekennzeichnet, dass** die vorgegebene Menge elektrisch leitfähigen nichtmagnetischen Materials in zumindest einer Kurzschlussringschale (23) vorgesehen ist, die radial nach innen offen ist und mit dem Blechpaket (13) am radial äußeren Rand axial abschließt.

7. Verfahren nach Anspruch 5 oder 6, **dadurch gekennzeichnet, dass** das Blechpaket (13) vor einem Eingießen des leitfähigen nichtmagnetischen Materials auf eine bestimmte Temperatur vorgewärmt wird.

8. Synchrone Reluktanzmaschine (1) mit einem Rotor (19) nach einem oder mehrerer der vorhergehenden Ansprüche, wobei die synchrone Reluktanzmaschine (1) direkt an einem elektrischen Versorgungsnetz betreibbar ist.

9. Verwendung zumindest einer synchronen Reluktanzmaschine (1) nach Anspruch 8 als Einzel- oder Gruppenantriebe, insbesondere bei Lüftern oder Kompressorantrieben.

## Claims

1. Rotor (10), in particular a synchronous reluctance machine (1) which can be operated directly on the electric supply network, wherein the rotor (10) has an axis (7), and the rotor (10) is provided with sheets (13) which are at least partly axially layered, wherein the rotor (10) is designed as a reluctance rotor which has a specified number of poles of the rotor (10) formed by flux-conducting portions (15) and in particular non-magnetic flux-blocking portions (16) of the individual sheets, wherein the rotor (10) has at least one cage which is made of electric conductors that run in a substantially axial direction and are connected at the end faces of the rotor by respective short-circuit rings (14), wherein the axially running conductors (19) are located in the radially outer region of at least some flux-blocking portions (16) arranged one behind the other substantially in an axial direction, **characterised in that** the internal diameter (21) of the conductor bars can be specified by the quantity of the conductive material used in liquid form with simultaneous rotation and/or tumbling of the rotor.

2. Rotor (10) according to claim 1,
**characterised in that** the poles of the rotor (10) are axially parallel, bevelled or skewed in an axial direction.

3. Rotor (10) according to claim 2,
**characterised in that** with an axial staggering of laminated-core assemblies of the rotor (10) the flux-blocking portions (16) of these partially laminated cores are rotated about a specified angle such that an axial design of an axially continuous electrical conductor (19) is enabled.

4. Rotor (10) according to one of the preceding claims,
**characterised in that** at least one short-circuit ring (14) is surrounded by a short-circuit ring shell (23) .

5. Method for producing a rotor (10) of a synchronous reluctance machine (1) which can be operated directly on the electric supply network, wherein the rotor (10) has an axis (7), and the rotor (10) is provided with sheets (13) which are at least partly axially layered, wherein the rotor (10) has a specific number of poles formed by flux-conducting portions (15) and in particular non-magnetic flux-blocking portions (16), by the following steps:
- punching sheets with specified sheet geometry,
- axial packaging of these sheets to form at least one laminated core (13),
- casting of a specified amount of electrically conductive non-magnetic material into a specified number of flux-blocking portions (16) with simultaneous rotation and/or tumbling of the rotor (10) in an auxiliary device,
- wherein during casting and/or thereinafter the rotor (10) is spun around its axis (7) at a comparatively high speed such that the electrically conductive non-magnetic material arranges itself at the radially external edges of the flux barriers (16) and cools down there, thus forming electrically conductive rods which electrically connect the short-circuit rings (14) at the end faces of the rotor (10) of the laminated core (13) to one another.

6. Method according to claim 5, **characterised in that** the specified amount of electrically conductive non-magnetic material is provided in at least one short-circuit ring shell (23) which is open radially inwards and ends axially with the laminated core (13) at the radially external edge.

7. Method according to claim 5 or 6,
**characterised in that** the laminated core (13) is preheated to a certain temperature before casting of the conductive non-magnetic material.

8. Synchronous reluctance machine (1) with a rotor (19) according to one or more of the preceding claims, wherein the synchronous reluctance machine (1) can be operated directly on an electric supply network.

9. Use of at least of one synchronous reluctance machine (1) according to claim 8 as individual or group drives, in particular for fans or compressor drives.

## Revendications

1. Rotor (10), notamment d'une machine (1) à réluctance synchrone pouvant fonctionner directement sur un réseau d'alimentation électrique, dans lequel le rotor (10) a un axe (7) et lequel rotor (10) est pourvu, au moins par tronçon, de tôles (13) feuilletées axialement, dans lequel le rotor (10) est constitué en induit à réluctance, qui a un nombre donné à l'avance de pôles du rotor (10), qui sont formés de tronçons (15) conducteurs de flux, et notamment de tronçons (16) amagnétiques d'arrêt du flux, des diverses tôles, le rotor (10) ayant au moins une cage formée par des conducteurs électriques s'étendant sensiblement axialement et reliés aux côtés frontaux du rotor respectivement par des anneaux (14) de court-circuit, dans lequel
les conducteurs (19), s'étendant axialement, se trouvent dans la partie extérieure radialement d'au moins certains tronçons (16) d'arrêt de flux disposés sensiblement les uns derrière les autres axialement, **caractérisé en ce que** le diamètre (21) intérieur des barreaux conducteurs peut être prescrit par la quantité du matériau conducteur inséré sous forme liquide lors de la rotation et/ou du mouvement de nutation simultanée du rotor.

2. Rotor (10) suivant la revendication 1, **caractérisé en ce que** les pôles du rotor (10) sont parallèles à l'axe, inclinés ou déjetés dans le tracé axial.

3. Rotor (10) suivant la revendication 2, **caractérisé en ce que**, pour un échelonnement axial de sous-paquets de tôles du rotor (10), les tronçons (16) d'arrêt du flux de ces sous paquets de tôles sont disposés en étant tournés d'un angle donné à l'avance de manière à rendre possible une conformation axiale d'un conducteur (19) électrique continu axialement.

4. Rotor (10) suivant l'une des revendications précédentes, **caractérisé en ce qu'**au moins un anneau (14) de court-circuit est entouré d'une coque (23) d'anneau de court-circuit.

5. Procédé de fabrication d'un rotor (10) d'une machine (1) à réluctance synchrone pouvant fonctionner directement sur un réseau d'alimentation électrique, dans lequel le rotor (10) a un axe (7) et lequel rotor (10) est pourvu, au moins par tronçon, de tôles (13) feuilletées axialement, dans lequel le rotor (10) est constitué en induit à réluctance, qui a un nombre donné à l'avance de pôles du rotor (10), qui sont formés de tronçons (15) conducteurs de flux et notamment de tronçons (16) amagnétiques d'arrêt de flux, par les stades suivants
- estampage de tôles de géométrie donnée à l'avance,
- mise en paquet axial de ces tôles en au moins un paquet (13) de tôles,
- coulée d'une quantité donnée à l'avance de matériau amagnétique conducteur de l'électricité dans un nombre donné à l'avance de tronçons (16) d'arrêt du flux, tout en imprimant au rotor (10) une rotation et/ou un mouvement de nutation dans un dispositif auxiliaire,
- dans lequel, pendant la coulée et/ou ensuite, on accélère le rotor (10) autour de son axe (7) à une vitesse de rotation comparativement grande, de manière à mettre le matériau amagnétique conducteur de l'électricité sur les bords extérieurs radialement des arrêts (16) du flux et à l'y refroidir et à former ainsi des barreaux conducteurs de l'électricité, qui relient entre eux électriquement les anneaux (14) de court-circuit sur les côtés frontaux du rotor (10) du paquet (13) de tôles.

6. Procédé suivant la revendication 5, **caractérisé en ce que** la quantité donnée à l'avance de matériau amagnétique conducteur de l'électricité est prévue dans au moins une coque (23) d'anneau de court-circuit, qui est ouverte vers l'intérieur radialement et qui se termine axialement au bord extérieur radialement par le paquet (13) de tôles.

7. Procédé suivant la revendication 5 ou 6, **caractérisé en ce que** l'on chauffe à l'avance, jusqu'à une température déterminée, le paquet (13) de tôles avant de couler le matériau amagnétique conducteur.

8. Machine (1) à réluctance synchrone, ayant un rotor (19) suivant l'une ou plusieurs des revendications précédentes, la machine (1) à réluctance synchrone pouvant fonctionner directement sur un réseau d'alimentation électrique.

9. Utilisation d'au moins une machine (1) à réluctance synchrone suivant la revendication 8, comme entraînement individuel ou de groupe, notamment dans des ventilateurs ou dans des entraînements de compresseur.
